# EUROPEAN PATENT APPLICATION

(11) **EP 2 361 885 A1**
(43) Date of publication of application: **31.08.2011**
(21) Application number: 09823338.0
(22) Date of filing: 29.10.2009
(51) Int. Cl.: C01F 7/36

(54) **POROUS ALUMINA FREE-STANDING FILM, ALUMINA SOL AND METHODS FOR PRODUCING SAME**

(30) Priority: 29.10.2008 JP 2008278951; 08.12.2008 JP 2008312762
(71) Applicant: Kawaken Fine Chemicals Co., Ltd., Chuo-ku Tokyo 103-0012 (JP); National Institute of Advanced Industrial Science and Technology, Tokyo 100-8921 (JP)
(72) Inventor: NAGAI, Naofumi, Kawagoe-shi Saitama 350-1151 (JP); MIZUKAMI, Fujio, Sendai-shi Miyagi 983-8551 (JP)
(74) Representative: Jansen, Cornelis Marinus
(86) International application number: PCT/JP2009/005761
(87) International publication number: WO 2010/050225

(57) **Abstract**

The present invention provides a porous alumina self-supporting film which has a sufficient strength to be used as a self-supporting film, is flexible and has a high transparency; an alumina sol that is composed of fibrous or needle-like boehmite particles dispersed in a solution and that has a high storage stability; and methods for producing such a film and such an alumina sol. More specifically, the invention provides a porous alumina self-supporting film which is composed of a collection of fibrous or needle-like alumina hydrate particles or alumina particles having an average breadth of 1 to 10 nm, an average aspect ratio (length/breadth) of 30 to 5,000 and an average length of 100 to 10,000 nm, has an orientation, has a pore distribution with a pore diameter dₚₑₐₖ of 0.5 to 20 nm, is flexible, has a high transparency, and has the ability to luminesce when excited by ultraviolet light; an alumina sol which has a Na, K and SO₄ content of 0 to 1 ppm, has an orientation when the particles are collected, and luminesces when excited by ultraviolet light after being fired at 250 to 900°C; and methods for producing such a film and such an alumina sol.

## Description

### TECHNICAL FIELD

The present invention relates to a porous alumina freestanding (self-supporting) film and a method for producing the same. More specifically, the invention relates to a porous alumina self-supporting film composed of a collection of fibrous or needle-like alumina hydrate particles or alumina particles having a large aspect ratio, and to a method for producing the same. This invention provides a novel porous alumina self-supporting film which has an orientation, contains micropores with a narrow pore distribution, maintains a high transparency and thermal stability, has the ability to luminesce when excited by ultraviolet light, and is capable of being used as a material in, for example, optical materials, sensor elements, separation membranes, photoelectrochemical membranes, ion-conducting membranes and catalyst carriers.

The present invention further relates to an alumina sol and a method for producing the same. More specifically, the invention relates to an alumina sol which is composed of high-aspect-ratio fibrous or needle-like alumina particles that are dispersed in a solution, has an orientation when the particles are collected, has a high storage stability, and is capable of forming a high-purity porous alumina self-supporting film, and also relates to a method for producing the same. This invention provides a novel alumina sol which has a high particle orientation at the time of transition to a dry gel, is capable of forming a high-purity porous alumina self-supporting film having pores, and is capable of being used as a material in, for example, optical materials, sensor elements, separation membranes, photoelectrochemical membranes, ion-conducting membranes and catalyst carriers.

### BACKGROUND ART

In recent years, with the trend toward flexible displays such as liquid crystal displays and organic electroluminescent displays, and toward flexible wiring substrates for electronic devices, there exists a demand for high-performance self-supporting films such as stand-alone films and sheets that are flexible, transparent and highly heat resistant. Organic films made of plastic or the like are endowed with an excellent flexibility and transparency, but have drawbacks such as a low heat resistance. Thin sheets of glass, etc. have an excellent heat resistance and transparency, but because glass sheets can be produced to thicknesses of not less than about 0.4 mm, there are limits to the lightness of weight and flexibility that can be achieved.

On the other hand, because alumina has both excellent electrical insulating properties and heat conductivity, it holds much promise as a material for stand-alone films and sheets having high heat resistance and flexibility. By firing a self-supporting porous pseudo-boehmite film under suitable conditions, various kinds of porous alumina self-supporting films can be obtained.

The prior-art concerning self-supporting pseudo-boehmite films includes, for example, highly transparent alumina sols composed of pseudo-boehmite crystals having a diameter of 10 nm or less and a length of 200 nm or less, and pseudo-boehmite films obtained from such alumina sols (Patent Document 1).

Another example of the prior art is a transparent alumina thin-film prepared by hydrolyzing a water-soluble inorganic aluminum salt or organic aluminum compound and warming the compound in an acidic solution to give a gelatinous boehmite, adding a water-soluble binder to the boehmite and forming it into a sheet, then drying and firing (Patent Document 2).

Also disclosed in the prior art is an aluminum oxide composite thin-film having a crystal orientation, which thin-film is obtained by spreading on a substrate a developing solution which contains a sol of ultrafine aluminum oxide particles and an amphoteric compound to either end of which have been added, respectively, polar groups and hydrophobic groups, then removing the solvent from the liquid film that has been formed (Patent Document 3).

The prior art also includes a self-supporting boehmite film having at least a millimeter order length per side which is obtained by hydrothermally reacting an aluminum plate with an aqueous solution of sodium hydroxide in an autoclave so as to form a film on the aluminum plate, then allowing the film to peel spontaneously (Patent Document 4).

Of the above-described prior-art, in Patent Document 1, a film is produced by synthesizing a sol containing needle-like pseudo-boehmite particles having a breadth of about 10 nm and a length of about 100 nm and using a liquid polyvinyl alcohol mixture as the binder, and the presence or absence of warpage is observed. However, the presence or absence of warpage is not observed in films produced only from synthesized pseudo-boehmite sol.

Moreover, films produced by the above method and composed of needle-like pseudo-boehmite particles having a breadth of about 10 nm and a length of about 100 nm lack sufficient flexibility. In addition, this document makes no mention of the flexibility of pseudo-boehmite films produced from an alumina sol alone which contains no polyvinyl alcohol or other water-soluble polymer as a binder.

The thin-film composed of boehmite disclosed in Patent Document 2 includes a water-soluble binder as an essential component. As a result, this type of thin-film is difficult to employ in applications that are poorly suited for the admixture of water-soluble binders. In cases where such a thin-film uses an organic compound mentioned as a water-soluble binder, the film obtained has a low heat resistance and other drawbacks, such as the inability to obtain a flat film when the organic matter is removed by firing.

No mention is made in this document of such properties as the transparency and flexibility of thin-films obtained from gelatinous boehmite prepared by hydrolyzing a water-soluble inorganic aluminum salt or an organic aluminum compound and warming the compound in an acidic solution, and of fired alumina thin-films.

Even with a film produced from a gelatinous boehmite obtained by hydrolyzing a water-soluble inorganic aluminum salt or organic aluminum compound, then warming the compound in an acidic solution, depending on the properties of the boehmite particles, it may not be possible to obtain a thin-film which is transparent and flexible.

The aluminum oxide composite thin-film disclosed in Patent Document 3 contains as an essential component an amphoteric compound to either end of which have been added polar groups and hydrophobic groups. However, such amphoteric compounds have a special structure and are not readily available; hence, this approach is inadequate as an industrial method for producing alumina thin-films.

Moreover, because this type of composite thin-film uses an organic compound, the resulting film has a low heat resistance and other drawbacks, such as an inability to obtain a flat film when the organic matter is removed by firing. In addition, depending on the properties of the aluminum oxide fine particles, it may not be possible to obtain a thin-film which is transparent and flexible. Furthermore, the resulting aluminum oxide composite thin-film is white and opaque, and has an inadequate flexibility.

Patent Document 4 discloses a method for producing a self-supporting boehmite film. However, this type of method has a number of drawbacks, including the following: the film thickness is difficult to regulate, the film is difficult to peel from the aluminum substrate, film synthesis must be carried out within a special apparatus, and self-supporting films with a broad surface area having a length and width of at least 5 cm each are difficult to produce. Moreover, due to the properties of boehmite particles obtained by such a method, it may not be possible to achieve a transparent and flexible self-supporting boehmite film.

Also, the alumina particles expected to serve as the starting materials for this type of film are known to include particles of various shapes, including plate-like, columnar, needle-like and fibrous particles. Attempts have been made to produce self-supporting films using sols of low-aspect ratio particles such as plate-like or columnar particles, but films having a sufficient size and strength to be used as a self-supporting film have not been obtained.

With particles having a high aspect ratio, a self-supporting film of a relatively large surface area is easily obtained and the pore size has a tendency to decrease. Yet, self-supporting films of a size, strength and flexibility sufficient for practical use have yet to be produced. Hence, there exists a desire for alumina sols from which self-supporting films having a strength sufficient for actual use can be produced.

Because alumina sols which exhibit relatively high aspect ratios have hitherto been produced using aluminum chloride, aluminum nitrate or aluminum sulfate, or using aluminum hydroxide containing an impurity such as Na₂O, when the resulting alumina sol is fired, it generates noxious gases. Moreover, such alumina sols have the drawback that, after firing, Na, K, Cl, NO₃ and SO₄ remain in the alumina, thus making it impossible to obtain high-quality alumina products.

Fibrous or needle-like alumina sols that have been proposed in the prior art include high-transparency alumina sols composed of pseudo-boehmite crystals having a breadth of 10 nm or less and a length of 200 nm or less (Patent Document 1).

Also disclosed in the prior art are needle-like boehmite particles produced by carrying out particle growth using aluminum hydroxide as the starting material and in the presence of metal ions such as Mg²⁺, Mn²⁺ or Zn²⁺ and anions such as carboxylic acid ions, nitric acid ions or sulfuric acid ions (Patent Document 5).

Still another example of the prior art is a method for producing needle-like boehmite particles, which method entails adding an aqueous solution of an alkali to an aqueous solution of a metal salt of aluminum and preparing a gelatinous aluminum hydroxide, then carrying out a four-stage hydrothermal treatment operation (Patent Document 6).

The method for producing needle-like boehmite disclosed in Patent Document 5 uses needle-like aluminum hydroxide, and the inadvertent admixture of metal ions and sulfuric acid ions in the alumina sol occurs. These factors have a large effect on the properties of the alumina, which is undesirable.

In addition, the particles used in such a production method have a breadth of 30 nm to 300 nm, a length of 1,000 nm to 10,000 nm, and an aspect ratio of 5 to 50. At a breadth of 10 nm and above, the resulting self-supporting film has a low flexibility. Moreover, in this production method, a further increase in the aspect ratio is not easy to achieve, and so the high-aspect ratio particles desired cannot be synthesized.

In the method for manufacturing needle-like boehmite disclosed in the above Patent Document 6, needle-like boehmite having a breadth of 5.5±0.5 nm, a length of 350±37 nm and an aspect ratio of 45 to 80 is obtained. However, there are problems with this production method from the standpoint of industrial application; namely, this method requires rapid temperature changes in the course of particle growth, and temperature control is difficult.

Patent Document 1: Japanese Patent Application Laid-open No. S59-78925
Patent Document 2: Japanese Patent Application Laid-open No. S60-235719
Patent Document 3: Japanese Patent Application Laid-open No. H5-238728
Patent Document 4: Japanese Patent Application Laid-open No. 2005-89260
Patent Document 5: Japanese Patent Application Laid-open No. 2008-37741
Patent Document 6: Japanese Patent Application Laid-open No. 2006-56739

Given such circumstances and in view of the foregoing prior art, the inventors have conducted extensive research with the aim of developing a self-supporting alumina film which has sufficient strength to be used as a self-supporting film, flexibility, a high transparency and does not give rise to cracking, and the aim of developing an alumina sol of fibrous or needle-like particles having a high aspect ratio for forming a high-purity porous alumina self-supporting film of sufficient surface area and strength for use as a self-supporting film. As a result, the inventors have discovered that, by forming a film from a collection of alumina hydrate particles or alumina particles having specific properties and a specific structure, there can be obtained a novel porous alumina self-supporting film which has an orientation, which has micropores or mesopores of a narrow pore distribution, which maintains a high transparency and a good thermal stability, and which also has the ability to luminesce when excited by ultraviolet light. Moreover, by utilizing an aluminum alkoxide as a starting material and carrying out reactions by a specific production method and under specific conditions, the inventors have succeeded in developing a high-purity alumina sol of fibrous or needle-like particles having a high aspect ratio, which sol has a particle orientation and is eminently suitable for the production of a self-supporting film that maintains a high storage stability. These findings ultimately led to the present invention.

### DISCLOSURE OF THE INVENTION

It is therefore an object of this invention to provide a porous alumina self-supporting film which has sufficient strength to be used as a self-supporting film, is flexible, has an orientation and heat resistance, has a high transparency, and moreover luminesces when excited by ultraviolet light. Another object of the invention is to provide a method for producing a porous alumina self-supporting film, which method is able to produce a porous alumina self-supporting film having a large surface area of about 100 cm × 100 cm by using an alumina sol of dispersed fibrous or needle-like alumina hydrate particles having a breadth of 2 to 5 nm, a length of 100 to 10,000 nm and an aspect ratio of 30 to 5,000, and without requiring special equipment and stringent conditions. Yet another object of the invention is to provide an alumina sol of fibrous or needle-like particles having a high aspect ratio for the purpose of forming a high-purity porous alumina self-supporting film having a sufficient surface area and strength to be used as a self-supporting film.

Next, a first aspect of the invention is described in detail.
This invention provides a porous alumina self-supporting film composed of a collection of fibrous or needle-like alumina hydrate particles or alumina particles having an aspect ratio (length/breadth) of from 30 to 5,000, this film being characterized by having properties such as the following. Namely, the film has an orientation, contains micropores or mesopores having a pore distribution such that a pore diameter dₚₑₐₖ indicating a peak top is from 0.5 to 20 nm in a pore distribution curve obtained by using the MP method or the BJH method to analyze a nitrogen adsorption isotherm measured at a liquid nitrogen temperature, has a total light transmittance more than 20% (at a film thickness of 0.1 to 100 µm), and has a heat resistance such that the film maintains a film structure when fired at a temperature up to 1,000°C.

The invention also provides a method for producing the above porous alumina self-supporting film, the method being characterized by coating, onto a substrate, an alumina sol in which are dispersed fibrous or needle-like alumina hydrate particles having a breadth of 2 to 5 nm, a length of 100 to 10,000 nm and an aspect ratio of 30 to 5,000; and removing the substrate after drying, and optionally performing heating and firing.

The porous alumina self-supporting film of the invention is composed of a collection of alumina hydrate particles or alumina particles which have a specific shape that is fibrous or needle-like and have an aspect ratio of from 30 to 5,000. In this invention, "a collection of alumina hydrate particles or alumina particles" refers to a collection formed by piling up alumina hydrate particles or alumina particles, some or all of which are arranged uniformly with the lengthwise direction thereof oriented in the planar direction of the film. Here, depending on the film production conditions, it is possible to obtain either a collection formed by piling up the particles in such a way that the lengthwise directions thereof are substantially uniformly arranged, or a collection formed by piling up the particles in such a way that the lengthwise directions thereof are random. In this invention, the "porosity" of the porous alumina self-supporting film refers to having a porous structure due to the voids that form between fibrous or needle-like particles.

The alumina hydrate particles which make up the porous alumina self-supporting film of the invention are preferably of at least one type selected from amorphous, boehmite and pseudo-boehmite particles, and are more preferably of at least one type selected from boehmite and pseudo-boehmite particles. Boehmite is composed of crystals of alumina hydrate having the compositional formula Al₂O₃.nH₂O (where n is 1 to 1.5). Pseudo-boehmite refers to a colloidal aggregate of boehmite.

The alumina hydrate particles making up the porous alumina self-supporting film of the invention are preferably of at least one type selected from amorphous, boehmite and pseudo-boehmite particles. Here, the amorphous, boehmite and pseudo-boehmite particles selected from these may be of one type or of two or more types. In this invention, by heat-treating the alumina hydrate particles at a specific temperature of 350°C or below, and especially at from 100°C to 300°C, that is, in a range of from 100°C to 300°C, a porous alumina self-supporting film composed of a collection of alumina hydrate particles of boehmite or pseudo-boehmite can be obtained. At a temperature in a range of 100°C to 300°C, a porous alumina self-supporting film which exhibits a pore distribution maximum at between 0.4 nm and 20 nm after firing treatment can be obtained.

The crystal system of the alumina particles making up the porous alumina self-supporting film of the invention is preferably at least one selected from γ, θ and α, and more preferably at least one selected from γ and θ. Here, the γ, θ and α selected from these may be of one type or of two or more types. The porous alumina self-supporting film composed of a collection of alumina particles in this invention is obtained by heating and firing a porous alumina self-supporting film which is a collection of alumina hydrate particles.

In the invention, by firing the alumina hydrate particles at a temperature in a range of from 250°C to 750°C, a porous alumina self-supporting film which luminesces can be obtained. When such a film is exposed to 356 nm ultraviolet light, it luminesces in a wavelength range of 400 nm to 700 nm. By firing the alumina hydrate particles at a temperature in a range of 400 to 900°C, a porous alumina self-supporting film which is a collection of primarily γ-alumina particles can be obtained. By firing the alumina hydrate particles at a temperature in a range of 900 to 1100°C, a porous alumina self-supporting film which is a collection of primarily θ-alumina particles can be obtained.

The porous alumina self-supporting film of the invention is made up of a collection of fibrous or needle-like alumina hydrate particles or alumina particles having a length/breadth aspect ratio of from 30 to 5,000, and preferably is made up of a collection of fibrous or needle-like alumina hydrate particles or alumina particles having an aspect ratio of from 100 to 3,000. In the case of a particle shape which is, for example, columnar or plate-like and has an aspect ratio of less than 30, the particles become finer in the course of drying, making it difficult to obtain a porous alumina self-supporting film. Moreover, even were a self-supporting film to be attainable, a film having flexibility cannot be obtained. In cases where the aspect ratio of the alumina hydrate particles or alumina particles exceeds 5,000, an inordinate production time is required, which is undesirable.

To be suitable for a coating operation and to obtain a porous alumina self-supporting film having a high transparency, it is preferable for the alumina hydrate particles or alumina particles to have a breadth of at least 1 nm but not more than 10 nm. In cases where the alumina hydrate particles or alumina particles have a breadth of less than 1 nm, the alumina hydrate particles or alumina particles tend to readily aggregate, as a result of which the viscosity rises. This makes a coating operation difficult to carry out, and is thus undesirable.

To obtain a porous alumina self-supporting film having sufficient flexibility and strength, the length of the alumina hydrate particles or alumina particles is preferably in a range of at least 100 nm but not more than 10,000 nm, and more preferably in a range of at least 700 nm but not more than 7,000 nm. Here, the length may be any one specific value selected from this range. In cases where the length of the alumina hydrate particles or alumina particles exceeds 10,000 nm, an inordinate production time is required, which is undesirable.

The porous alumina self-supporting film of the invention has an orientation. In cases where film anisotropy compatible with properties such as the heat conductivity or electrical conductivity of alumina is utilized, in a porous alumina self-supporting film which is a collection of boehmite or pseudo-boehmite particles obtained by firing alumina hydrate particles at a temperature in a range of 100 to 300°C, it is preferable for the film to have a crystal orientation characterized by a diffraction intensity ratio d(020)/d(0120) in x-ray diffraction analysis of at least 5.

The porous alumina self-supporting film of the invention has fine pores with a pore distribution such that a pore diameter indicating the peak top dₚₑₐₖ is from 0.5 to 20 nm in a pore distribution curve obtained by using the MP method or the BJH method to analyze, as a micropore or mesopore-dependent hysteresis, a nitrogen adsorption isotherm measured at a liquid nitrogen temperature. Here, "MP method" refers to a method for determining, for example, the micropore volume, the micropore surface area and the micropore distribution from an adsorption isotherm (see R.S. Mikhail, S. Brunauer, E.E. Bodor: J. Colloid Interface Sci. 26, 45 (1968)). "BJH method" refers to a method for determining, for example, the mesopore volume, mesopore surface area and mesopore distribution from an adsorption isotherm (see E.P. Barrett, L.G. Joyner, P.P. Halenda: J. Am. Chem. Soc., 73, 373 (1951)).

Here, "micropore" refers to pores having a diameter of less than 2 nm, and "mesopore" refers to pores having a diameter of at least 2 nm but less than 50 nm. "Pore distribution curve" refers to a curve showing the pore size distribution ratios for a solid powder or the like, and indicates the relationship between the pore diameter and the pore volume.

The pore distribution curve of the porous alumina self-supporting film in this invention, letting the pore diameter be dp and the pore volume be Vp, indicates the curve created from a plurality of plots and by interpolation between these plots on a graph of the value of dp on the horizontal axis versus dVp/ddp (i.e., the value obtained by differentiating the pore volume Vp with respect to the pore diameter dp) on the vertical axis. This curve shows how pores with the respective pore diameters are distributed in a porous alumina self-supporting film.

The "peak top" of a pore distribution curve refers to the maximum of dVp/ddp. Because the porous alumina self-supporting film of the invention is composed of micropores or mesopores having a narrow pore distribution, it exhibits a high selectivity for permeability and adsorption properties, and is thus useful as a separation membrane for gases and the like, and as a catalyst carrier.

The porous alumina self-supporting film of the invention has a transparency such that, at a film thickness in a range of 0.1 to 100 µm, the total light transmittance is at least 20%, and preferably at least 50%. Because this total light transmittance differs depending on the film thickness, in the present invention, it is specified based on a film thickness of 0.1 to 100 µm. The thickness of the porous alumina self-supporting film of the invention is more than 0 µm and up to 1,000 µm. Here, "more than 0 µm and up to 1,000 µm" refers to a thickness which is a value greater than 0 µm, and is a specific value in a range of up to 1,000 µm.

In order for the inventive porous alumina self-supporting film which is a collection of at least one type of alumina hydrate particles selected from amorphous, boehmite and pseudo-boehmite particles to have a sufficient strength and flexibility as a self-supporting film, it is preferable that, when a flex resistance test is carried out according to JIS K5600-5-1 in a state immediately after being peeled from a substrate and at a film thickness of 100 µm or less, cracking not occur at a cylindrical mandrel diameter of 2 mm or more.

In cases where the porous alumina self-supporting film of the invention is produced by firing at a temperature in a range of 250 to 750°C, it luminesces when exposed to ultraviolet light for example. In particular, when exposed to ultraviolet light at a wavelength of 365 nm, it luminesces in a wavelength range of 400 nm to 700 nm. The porous alumina self-supporting film of the invention retains a film structure even when produced by firing at a temperature up to 1,000°C; that is, even when heated to and fired at a temperature up to 1,000°C. The porous alumina self-supporting film obtained by firing at a temperature of up to 1,000°C, that is, by heating and firing at a temperature up to 1,000°C is a collection of primarily θ-alumina particles. Moreover, with the porous alumina self-supporting film of the invention, it is possible to obtain a film having the above-indicated flexibility and transparency even without including a water-soluble polymer or a surfactant.

Next, a method for producing a porous alumina self-supporting film of the invention is described. The porous alumina self-supporting film of the invention can be produced by coating an aqueous alumina sol in which are dispersed fibrous or needle-like alumina hydrate particles having a breadth of 2 to 5 nm, a length of 100 to 10,000 nm and an aspect ratio of 30 to 5,000 onto a water-repelling substrate, drying, then peeling from the substrate, or by peeling from the substrate, and performing heating and firing. The aqueous alumina sol may be produced by hydrolyzing and peptizing, under acidic conditions, a hydrolyzable aluminum compound.

By suitably selecting the type of hydrolyzable aluminum compound and the conditions of hydrolysis and peptization, an aqueous alumina sol composed of alumina hydrate particles which are amorphous, boehmite or pseudo-boehmite can be produced. Preferred examples of the crystal system of the alumina hydrate particles include boehmite and pseudo-boehmite.

Hydrolyzable aluminum compounds include various types of inorganic aluminum compounds, and aluminum compounds having organic groups. Illustrative examples of inorganic aluminum compounds include the salts of inorganic acids, such as aluminum chloride, aluminum sulfate and aluminum nitrate, aluminates such as sodium aluminate, and aluminum hydroxide.

Aluminum compounds having organic groups include carboxylates such as aluminum acetate; aluminum alkoxides such as aluminum ethoxide, aluminum isopropoxide, aluminum n-butoxide and aluminum sec-butoxide; cyclic aluminum oligomers; aluminum chelates such as diisopropoxy(ethyl acetoacetate)aluminum and tris(ethyl acetoacetate)aluminum; and organoaluminum compounds such as alkylaluminums.

Of these compounds, aluminum alkoxides are preferred because they have a suitable hydrolyzability and removal of the by-products is easy. Those having an alkoxyl group of 2 to 5 carbons are especially preferred. The amount of water is adjusted so that the concentration of fibrous boehmite or pseudo-boehmite particles in the aqueous boehmite sol is preferably from 0.1 to 20 wt%, and more preferably from 0.5 to 10 wt%.

When the concentration of fibrous boehmite or pseudo-boehmite particles in the aqueous boehmite sol is less than 0.1 wt%, an inordinate amount of time is required for drying. On the other hand, at a concentration of more than 20 wt%, the viscosity of the dispersion becomes high, making it difficult to obtain a uniform film, which is undesirable. An alcohol, ketone, ether, water-soluble polymer or the like may be added to the above aqueous alumina sols, provided doing so does not adversely affect the properties of the desired porous alumina self-supporting film.

After adding a given amount of water and also a hydrolyzable aluminum compound, hydrothermal treatment is carried out by heating for 0.5 to 10 hours at a temperature in a range of 80 to 170°C, and preferably for 1 to 5 hours at a temperature in a range of 100 to 150°C. At below 85°C, hydrolysis takes a long time; on the other hand, when the reaction is carried out at a temperature above 170°C, the increase in the rate of hydrolysis is slight, in addition to which equipment such as a vessel having a high pressure resistance is required, which is economically disadvantageous and thus undesirable. At a heating time of less than 0.5 hour, temperature regulation is difficult; on the other hand, when heating is carried out for more than 10 hours, this only increases the duration of the operation and is thus undesirable.

Next, the alumina slurry obtained by hydrolysis is peptized by heating in the presence of a given amount of acid. The acid is preferably a monovalent acid such as hydrochloric acid, nitric acid, formic acid or acetic acid. Acetic acid is especially preferred. The amount of acetic acid included is typically from 0.1 to 2 moles, and preferably from 0.3 to 1.5 moles, per mole of the hydrolyzable aluminum compound.

When the amount of acid included is less than 0.1 mol, peptization does not fully proceed, as a result of which the desired aqueous alumina sol of dispersed fibrous or needle-like alumina hydrate particles having an average breadth of 1 to 10 nm, an average length of 100 to 10,000 nm and an average aspect ratio of 30 to 5,000 cannot be obtained. In cases where the amount of acid exceeds 2 moles, the stability over time decreases, which is undesirable.

The fibrous alumina particle dispersion employed in producing the porous alumina self-supporting film of the invention has a pH of preferably from 2.5 to 4. However, it is possible to obtain a porous alumina self-supporting film regardless of whether the pH of the dispersion is neutral or alkaline. In such a case, sodium hydroxide, potassium hydroxide, sodium carbonate, sodium bicarbonate, ammonia or an organic amine such as ethylamine, tetramethylammonium hydroxide or urea may be used as the pH adjusting reagent. However, the use of an inorganic hydroxide, a carbonate or the like is undesirable because of residual elements that remain behind after firing; the use of an organic amine is preferred. In cases where a basic substance such as ammonia or an organic amine is generated in the process of porous alumina film formation, this eliminates the need to add such a pH adjustor. Hence, an additive for adjusting the pH is not particularly indispensable and not particularly required.

In cases where the aqueous alumina sol has a high viscosity, because bubbles are present in the liquid, degassing treatment is required. Bubbles can be removed by using, for example, vacuum treatment or centrifugal treatment as the degassing process. An aqueous pseudo-alumina sol that has been degassed is coated onto a substrate, then dried by removing the dispersing medium.

Any type of plastic may be used as the substrate. Illustrative examples include polyester resins such as polyethylene terephthalate and polyester diacetate, polycarbonate resins, fluoroplastics such as polytetrafluoroethylene, and polypropylene. Because a substrate having water-repelling properties readily peels at room temperature, enabling a self-supporting film to be obtained, the use of a water-repelling substrate composed of a water-repelling material, such as a polytetrafluoroethylene material, is preferred.

Various common coating methods may be used, depending on the viscosity of the aqueous pseudo-alumina sol and the desired film shape and size. Illustrative examples of coating methods include casting, doctor blade coating, knife coating and bar coating. The method for removing the dispersing medium is preferably an evaporation method. The porous alumina self-supporting film of the invention can be obtained by drying for a period of from 10 minutes to 5 hours in a constant-temperature chamber at a temperature in a range of from 10 to 100°C.

The thickness of the porous alumina self-supporting film of the invention can be easily adjusted by the amount of alumina particles in the dispersing medium. It is possible to produce a porous alumina self-supporting film having a thickness in a range of from 0.1 to 100 µm. Moreover, it is possible to produce a large surface-area film having a film surface area such as 100 cm × 100 cm. The film shape may be suitably altered by cutting such a film.

Upon examining the fibrous or needle-like alumina particles making up the porous alumina self-supporting film of the invention with a transmission electron microscope (TEM), voids were observed at the interior. After production of the film, by injecting into the voids a resin or resin precursor dissolved in a solvent, then removing the solvent and curing the resin, a resin-containing porous alumina self-supporting film composed of a collection of fibrous or needle-like alumina particles can be produced.

A porous alumina self-supporting film composed of γ, θ or α-alumina particles having a fibrous or needle-like shape can be obtained by heating and firing the self-supporting film composed of the alumina hydrate particles of the invention in an electric oven at a temperature in a range of from 100 to 1,500°C.

The porous alumina self-supporting film of the invention is characterized by the following film properties: an aspect ratio of from 100 to 3,000; contains micropores or mesopores having a pore distribution dₚₑₐₖ of 0.5 to 20 nm; a total light transmittance of more than 20%; a crystal orientation (particularly, in a self-supporting film composed of at least one type selected from boehmite and pseudo-boehmite particles, a d(020)/d(120) diffraction intensity ratio in x-ray diffraction analysis of at least 5); flexibility (in a self-supporting film composed of at least one type of particle selected from amorphous, boehmite and pseudo-boehmite particles, immediately after being peeled from the substrate), no cracking at R = 2 mm (flex resistance test based on JIS K5600-5-1); heat resistance, maintains film structure when fired at a temperature up to 1,000°C (self-supporting film composed primarily of θ-alumina); luminesces when excited by ultraviolet light (when fired at a temperature in a range of 250°C to 750°C).

Next, a second aspect of the invention is described in detail.
This invention is an alumina sol obtained by hydrolyzing aluminum alkoxide, which alumina sol is composed of fibrous or needle-like alumina hydrate particles or alumina particles having a breadth of 1 to 10 nm, a length of 100 to 10,000 nm and an aspect ratio (length/breadth) of 30 to 5,000 which are dispersed in a solution. The alumina sol is characterized by having a Na, K and SO₄ content of from 0 to 1 ppm, by having an orientation when the particles are collected, and by luminescing when excited by ultraviolet light after being fired at 250 to 900°C.

That is, the invention is an alumina sol obtained by dispersing, in a solution, fibrous or needle-like alumina hydrate particles or alumina particles having a breadth of 1 to 10 nm, a length of 100 to 10,000 nm and an aspect ratio (length/breadth) of 30 to 5000, which alumina sol has a Na, K and SO₄ content of 0 to 1 ppm, has an orientation when the particles are collected, and luminesces when excited by ultraviolet light subsequent to firing treatment at 250 to 900°C.

The alumina sol of the invention is an alumina sol composed of fibrous or needle-like particles synthesized by a sol-gel process using an aluminum alkoxide as the starting material. The particles are alumina hydrate crystals having the compositional formula Al₂O₃·nH₂O (where n is 1 to 1.5), and the crystal system is boehmite or pseudo-boehmite.

The alumina sol of the invention is an alumina sol composed of fibrous or needle-like alumina particles having an average aspect ratio (length/breadth) of 30 to 5,000, an average breadth of 1 to 10 nm, and an average length of 100 to 10,000 nm. Preferably, the aspect ratio is from 100 to 3,000, the average breadth is from 2 to 5 nm, and the average length is from 500 to 7,000 nm.

If the aspect ratio is more than 5,000, an inordinate production time is required, which is impractical. Moreover, films composed of such gigantic molecules have a poor transparency and flexibility, which is undesirable. In cases where the particles have an average breadth of less than 1 nm, because the particles are very small, they readily aggregate, as a result of which the viscosity rises and the storage stability decreases, which is undesirable.

In the invention, the "collecting" of fibrous or needle-like alumina particles is defined as meaning the piling up of fibrous or needle-like alumina particles in the planar direction and the vertical direction. By carrying out film formation using the alumina sol of the invention, it is possible to produce a porous alumina self-supporting film.
The alumina sol of the invention has an orientation at the time of particle collection. In this invention, "porous" is defined as meaning to have voids formed between the fibrous or needle-like particles. The average length of the particles is preferably from 700 to 7,000 nm. In cases where the average length is less than 100 nm, the flexibility and strength of the film obtained by film formation are inadequate, which is undesirable. In cases where the average length exceeds 10,000 nm, an inordinate production time is required, which is undesirable.

In the alumina sol of the invention, it is preferable for the crystal system of the alumina particles in the dry alumina gel obtained by removing the solvent to be boehmite or pseudo-boehmite. Also, it is preferable for the alumina sol of the invention to have a Na, K, Cl and SO₄ concentration in the alumina sol solution of not more than 1 ppm; that is, from 0 to 1 ppm. The alumina gel, which is obtained by firing at 150°C the dry alumina gel obtained by removing solvent from the alumina sol, exhibits a pore distribution maximum at between 0.4 nm and 20 nm.

Moreover, the alumina sol of the invention is characterized in that a dry alumina gel obtained by removing the solvent from the above alumina sol exhibits luminescence when fired at 250°C to 900°C and then irradiated with 365 nm wavelength light. Namely, a dry alumina gel obtained by removing the solvent from the above alumina sol luminesces in a wavelength range of 390 nm to 700 nm when fired at 250°C to 900°C and then irradiated with 365 nm wavelength light. Also, the above alumina sol has a viscosity that does not change over time even when held at room temperature for two months.

By using the fibrous or needle-like alumina sol of the invention, it is possible to produce a porous alumina self-supporting film even without including a water-soluble polymer or a surfactant. A method for producing self-supporting film is described below, although the method employed is not necessarily limited to this method. In the present invention, a dispersion of fibrous or needle-like alumina particles is cast into a Teflon®-coated vessel (80 mm × 80 mm × 2 mm) and dried in a forced-air oven at 40°C for 3 hours to form a film. The film is then peeled from the substrate, giving a porous alumina self-supporting film.

Because the fibrous or needle-like alumina sol of the invention has an acidic pH of 2.5 to 4, when used in coatings, films and the like, it may exert a corrosive or other influence on the substrate. In such cases, by adding a pH adjusting reagent and adjusting the pH of the alumina sol to neutrality or alkalinity, a coat can be formed while suppressing the influence on the substrate.

Examples of pH adjusting reagents that may be used in this case include sodium hydroxide, potassium hydroxide, sodium carbonate, sodium bicarbonate, ammonia, and organic amines such as ethylamine, tetramethylammonium hydroxide and urea. Because the inorganic hydroxide, carbonate and the like end up remaining in elemental form after firing, these are not preferred; the use of ammonia or an organic amine is preferred.

When a basic substance such as ammonia or an organic amine is generated in the course of porous alumina film formation, there is no particular need to add this type of adjusting agent. Hence, an additive for adjusting the pH is not particularly indispensable and not particularly required is such cases.

Next, a method for producing the alumina sol of the invention is described. In this invention, an aqueous alumina sol in which are dispersed fibrous or needle-like alumina hydrate particles having an average breath of 1 to 10 nm, an average aspect ratio of 30 to 5,000 and an average length of 100 to 10,000 nm can be prepared by hydrolyzing an aluminum alkoxide in an aqueous solution of an acid to form an alumina hydrate, removing an alcohol that has been formed, and then performing peptizing, and by setting the hydrolysis reaction conditions and the peptization conditions at that time to the subsequently described specific conditions.

Illustrative examples of the aluminum alkoxide include such aluminum alkoxides as aluminum ethoxide, aluminum isopropoxide, aluminum n-butoxide and aluminum sec-butoxide; cyclic aluminum oligomers; and aluminum chelates such as diisopropoxy(ethyl acetoacetate)aluminum and tris(ethyl acetoacetate)aluminum.

Of these compounds, one having alkoxyl groups with 2 to 5 carbon is especially preferred because they have a suitable degree of hydrolyzability and removal of the by-products is easy. Moreover, with regard to the form of these alkoxides, they may be liquid or may be in a powder or granular form, and they preferably have a purity of at least 99%.

The acid used in hydrolysis is preferably a monovalent acid such as hydrochloric acid, nitric acid, formic acid, acetic acid, propionic acid or butyric acid. Inorganic acids end up remaining in the alumina even after firing, and thus are not desirable. From the standpoint of ease of operation and cost-effectiveness, acetic acid is especially preferred as the organic acid. The amount of acid used is from 0.2 to 2.0 moles, and preferably from 0.3 to 1.8 moles, per mole of aluminum alkoxide. At less than 0.2 mole, the aspect ratio of the particles obtained is small, which is undesirable. On the other hand, an amount of acid greater than 2.0 moles is undesirable because the stability over time decreases and is also undesirable in terms of cost-effectiveness.

The hydrolysis conditions are preferably a temperature of 100°C or less and a period of from 0.1 to 3 hours. At temperatures in excess of 100°C, there is a risk of bumping, which is undesirable. At a hydrolysis time of less than 0.1 hour, temperature control is difficult; at more than 3 hours, the process time becomes long, which is undesirable.

The solids concentration of the aluminum alkoxide to be hydrolyzed in the aqueous solution of an acid is preferably from 2 to 15 wt%, and more preferably from 3 to 10 wt%. At a solids concentration below 2 wt%, the aspect ratio of the particles obtained becomes small, which is undesirable. On the other hand, at a solids concentration above 15 wt%, the amenability of the reaction mixture to stirring during peptization decreases, which is undesirable.

After the alcohol which formed in hydrolysis has been removed by distillation, peptization is carried out. Peptization is treatment at from 100°C to 200°C for a period of 0.1 to 10 hours, and preferably at 110 to 180°C for a period of 0.5 to 5 hours. When the heating temperature is below 100°C, a long time is required for the reaction. On the other hand, when the temperature exceeds 200°C, a high-pressure vessel or the like is required, which is economically disadvantageous and thus undesirable. At a heating time of less than 0.1 hour, the particle size is small and the storage stability low. On the other hand, at a heating time of more than 10 hours, the duration of the operation merely increases, which is undesirable.

In the present invention, by satisfying these conditions, it is possible to produce and provide an alumina sol composed of fibrous or needle-like alumina hydrate particles or alumina particles having a breadth of 1 to 10 nm, a length of 100 to 10,000 nm and an aspect ratio (length/breadth) of 30 to 5,000 and dispersed in a solution, which sol is characterized by having a Na, K and SO₄ content of 0 to 1 ppm, by having an orientation when the particles are collected, and by luminescing when excited by ultraviolet light following firing treatment at 250 to 900°C.

The present invention provides the following advantages.
(1) The invention is able to provide a porous alumina self-supporting film which has a sufficient strength to be used as a self-supporting film, flexibility, contains micropores or mesopores, does not give rise to cracking, and has a high transparency.
(2) Because the porous alumina self-supporting film of the invention is flexible, it is useful as a precursor for an alumina thin-film material and as a highly crystalline porous alumina self-supporting film which are required to be easy to work and flexible.
(3) Because the porous alumina self-supporting film of the invention is composed of highly oriented fibrous or needle-like alumina particles of boehmite, pseudo-boehmite or the like, the porous alumina self-supporting film of the invention has a high flexibility, transparency and orientation, even without containing a water-soluble binder or a surfactant.
(4) The present invention is useful in that it provides a novel porous alumina self-supporting film which can be used as a precursor for self-supporting alumina films, or can be used as a material in, for example, optical materials, sensor elements, separation membranes, photoelectrochemical membranes, ion-conducting membranes and catalyst carriers endowed with excellent thermal stability, heat conductivity and electrical insulating properties.
(5) The present invention is able to provide an alumina sol of high-aspect-ratio fibrous or needle-like alumina particles dispersed in a solution, which alumina sol has a high storage stability and is capable of producing a high-purity porous alumina self-supporting film.
(6) An alumina sol can be provided which is composed of, dispersed in a solution, fibrous or needle-like alumina hydrate particles or alumina particles having a breadth of 1 to 10 nm, a length of 100 to 10,000 nm and an aspect ratio (length/breadth) of 30 to 5,000, which has a Na, K and SO₄ content of 0 to 1 ppm and an orientation at the time of particle collection, and which luminesces when excited by ultraviolet light after firing treatment at 250 to 900°C.
(7) A high-purity porous alumina self-supporting film which luminesces when irradiated with 365 nm wavelength light can be produced by firing at 250 to 900°C a dry alumina gel obtained by removing solvent from the alumina sol of the invention.
(8) A novel alumina sol can be provided which is capable of being used as a starting material for porous alumina self-supporting films and precursors of, e.g., supported films obtained by coating treatment or the like; specifically, as a starting material for, e.g., optical materials, sensor elements, separation membranes, photoelectrochemical membranes, ion-conducting membranes and catalyst carriers endowed with excellent thermal stability, heat conductivity and electrical insulating properties.

### BRIEF DESCRIPTION OF THE DIAGRAMS

FIG. 1 is a transmission electron microscopic (TEM) image of the self-supporting pseudo-boehmite film obtained as the porous alumina self-supporting film produced in Example 1.
FIG. 2 is an x-ray diffraction pattern for the self-supporting pseudo-boehmite film obtained as the porous alumina self-supporting film produced in Example 1.
FIG. 3 shows porous alumina self-supporting films produced in Example 3, these being self-supporting films produced by firing at, from the left, 300°C, 600°C, and 1,000°C for 5 hours in each case.
FIG. 4 is a pore distribution curve (dp: pore diameter; VP: pore volume) for the porous alumina self-supporting film.
FIG. 5 depicts the state of luminescence when a porous alumina self-supporting film of the invention was irradiated with ultraviolet light having a wavelength of 365 nm.
FIG. 6 is a transmission electron microscopic image of the alumina sol synthesized in Example 6.
FIG. 7 is a pore distribution curve of the dry alumina gel produced in Example 6.
FIG. 8 is an x-ray diffraction pattern for the dry alumina gel produced in Example 6.
FIG. 9 is the emission spectrum obtained when the dry alumina gel produced in Example 6 was excited by ultraviolet light having a wavelength of 365 nm.

### BEST MODE FOR CARRYING OUT THE INVENTION

Next, the invention is described more concretely by way of examples. However, the invention is in no way limited by the following examples.

In the examples below, identification of the particles making up the self-supporting film was carried out by x-ray diffraction analysis. In x-ray diffraction analysis, measurements were conducted at a diffraction angle 2θ of from 10 to 90°. The average length, average breadth and aspect ratio of the fibrous pseudo-boehmite particles are indicated as mean values of the numerical values measured from electron micrographs.

The intensity ratio at specific crystal planes in fibrous pseudo-boehmite particles, etc. are indicated as the intensity ratio of the diffraction peaks in the (020) crystal plane and the (120) crystal plane of pseudo-boehmite particles obtained using an x-ray diffractometer. The total light transmittance of the self-supporting film was measured with a turbidimeter.

The flexibility of the self-supporting film was obtained by using a cylindrical mandrel bending tester in accordance with JIS K5600-5-1 to evaluate the film immediately after drying.

The following measurement apparatuses were used.
- X-ray diffractometer (Mac. Sci. MXP-18; tube, Cu; tube pressure, 40 kV; tube current, 250 mA; goniometer, wide-angle goniometer; sampling width, 0.020°; scanning rate, 10°/min; divergent slit, 0.5°; scattering slit, 0.5°; receiving slit, 0.30 mm)
- Transmission electron microscope (FEI-TECNAI-G20)
- Turbidimeter (available from Nippon Denshoku Industries Co., Ltd.; NDH5000)
- Cylindrical mandrel bending tester: BD-2000 (available from Cotec Corporation).

### Example 1

Ion-exchanged water (300 g) was placed in a 500 mL four-necked flask, and the liquid temperature in the flask was raised to 75°C under stirring. Next, 34 g (0.17 mol) of aluminum isopropoxide was added dropwise thereto and the liquid temperature in the flask was raised to 95°C while distilling off the isopropyl alcohol that formed. The reaction mixture was transferred to a magnetic stirring-type autoclave, 3.1 g (0.051 mol) of acetic acid was added thereto, and the reaction was carried out at 150°C for 6 hours under stirring.

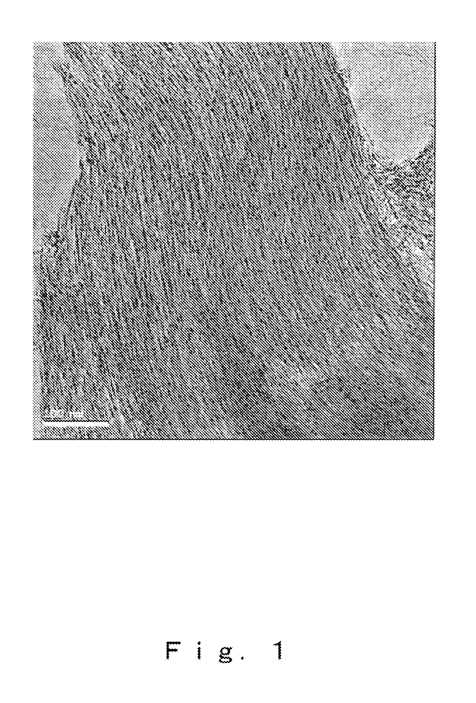

The reaction mixture was cooled to 40°C or below to bring the reaction to completion. The solids concentration in the reaction mixture was 2.8 wt%. The alumina particles obtained were examined with a transmission electron microscope (TEM) and found to be fibrous alumina particles having an average breadth of 4 nm, an average length of 3,000 nm and an average aspect ratio of 750. FIG. 1 shows a transmission electron microscopic (TEM) image of a self-supporting boehmite film as the porous alumina self-supporting film produced in this example.

Next, 92 g of the resulting fibrous alumina particle dispersion (solids content, 2.8 wt%) and 64 g of ion-exchanged water were placed in a plastic vessel and vigorously shaken for 20 minutes. The dispersion was degassed with a centrifuge to obtain a uniform dispersion. The dispersion was cast into a Teflon®-coated vessel (300 m × 280 mm × 10 mm), then dried at 40°C for 3 hours in a forced-air oven. In this way, a uniform self-supporting film having a length of 300 mm, a width of 280 mm and a thickness of 10 µm was obtained. This film had a total light transmittance of 69%.

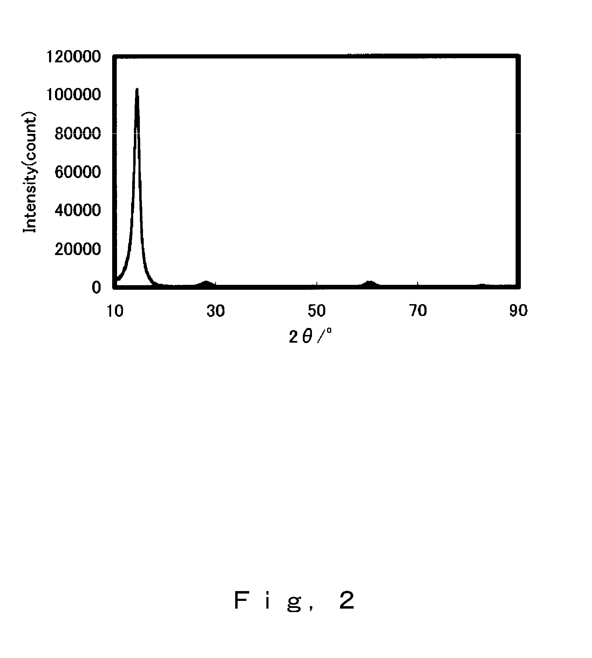

The x-ray diffraction pattern of this self-supporting boehmite film is shown in FIG. 2. The crystal system was boehmite, and the peak intensity ratio between the (020) plane peak near 14.5° and the (120) plane peak near 28.5° was (020)/(120) = 25. When the flexibility of this self-supporting film was measured, even at a mandrel diameter of 2 to 32 mm, cracking was not observed in the film.

### Example 2

Ion-exchanged water (300 g) was placed in a 500 mL four-necked flask, and the liquid temperature in the flask was raised to 75°C under stirring. Next, 64 g (0.34 mol) of aluminum isopropoxide was added dropwise thereto and the liquid temperature in the flask was raised to 98°C while distilling off the isopropyl alcohol that formed. The reaction mixture was transferred to a magnetic stirring-type autoclave, 10.2 g (0.17 mol) of acetic acid was added thereto to carry out the reaction thereof at 160°C for 3 hours under stirring.

The reaction mixture was cooled to 40°C or below to bring the reaction to completion. The solids concentration in the reaction mixture was 4.8 wt%. The alumina particles obtained were examined with a transmission electron microscope (TEM) and found to be fibrous alumina particles having an average breadth of 2 nm, an average length of 2,000 nm and an average aspect ratio of 1,000.

Next, 11 g of this fibrous alumina particle dispersion (solids content, 5 wt%) and 9 g of ion-exchanged water were placed in a plastic vessel and vigorously shaken for 20 minutes. This dispersion was degassed with a centrifuge to obtain a uniform dispersion. The dispersion was cast into a Teflon®-coated vessel (80 m × 80 mm × 10 mm), then dried at 40°C for 3 hours in a forced-air oven. In this way, a uniform self-supporting film having a length of 80 mm, a width of 80 mm and a thickness of 50 µm was obtained. This self-supporting film had a total light transmittance of 91%.

The crystal system was boehmite, and the peak intensity ratio between the (020) plane peak near 14.5° and the (120) plane peak near 28.5° thereof was (020)/(120) = 15. When the flexibility of this self-supporting film was measured, even at a mandrel diameter of 2 to 32 mm, cracking was not observed in the film.

### Example 3

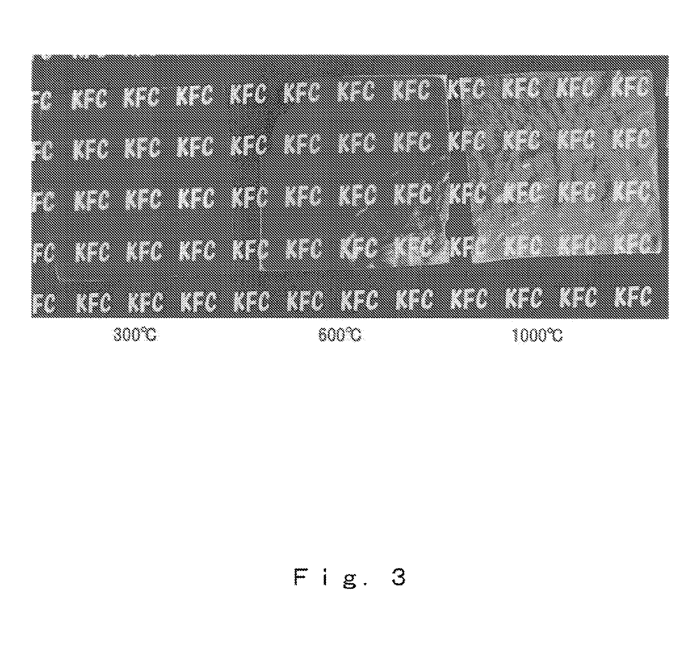

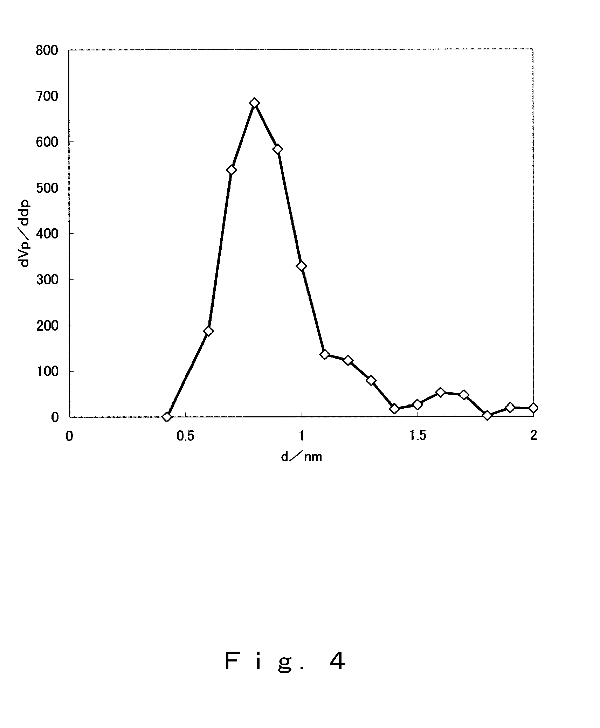

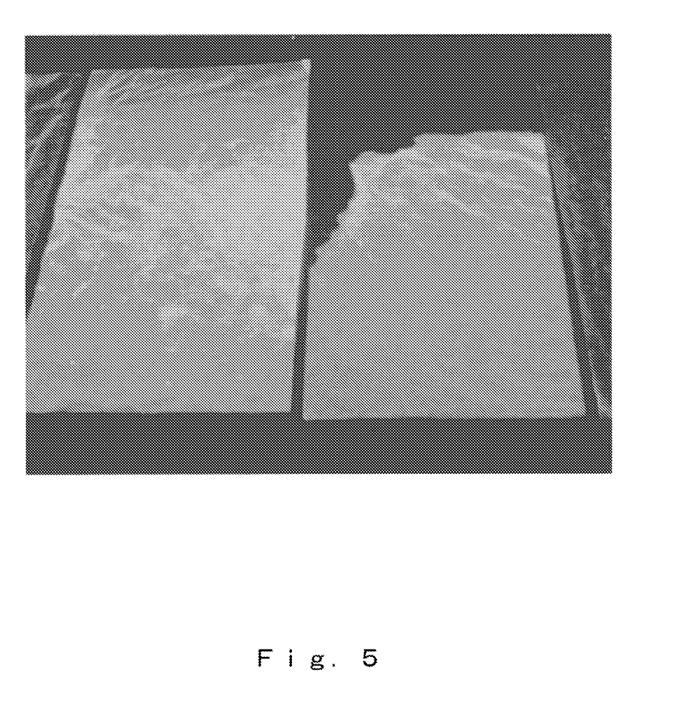

Self-supporting boehmite films produced by the same operations as in Example 2 were fired for 5 hours in an electric oven at 300°C, 600°C and 1000°C. The resulting self-supporting films retained a film structure without breaking up into powder. The crystal systems following the respective temperature treatments were boehmite (300°C), γ (600°C), and θ (1,000°C). FIG. 3 shows photographs of the porous alumina self-supporting films produced by firing at the respective temperatures. These are self-supporting films produced by firing at, from the left, 300°C, 600°C, and 1,000°C for 5 hours in each case. FIG. 4 is a pore distribution curve of a porous alumina self-supporting film. FIG. 5 depicts the state of luminescence when a porous alumina self-supporting film of the invention was irradiated with ultraviolet light having a wavelength of 365 nm.

### Example 4

Eight grams of the fibrous alumina sol prepared in Example 1 (pH 3.5) was adjusted to pH 7 with ammonia water. The resulting dispersion was degassed with a centrifuge, thereby giving a uniform dispersion. The dispersion was cast into a Teflon®-coated vessel (80 m × 80 mm × 10 mm), then dried at 40°C for 3 hours in a forced-air oven. In this way, a uniform self-supporting film having a length of 80 mm, a width of 80 mm and a thickness of 20 µm was obtained. This self-supporting film had a total light transmittance of 60%.

The crystal system was boehmite, and the peak intensity ratio thereof between the (020) plane peak near 14.5° and the (120) plane peak near 28.5° was (020)/(120) = 23.

### Example 5

Fifteen grams of the fibrous alumina sol prepared in Example 1 was adjusted to pH 10 with ammonia water. The resulting dispersion was degassed with a centrifuge, thereby giving a uniform dispersion. The dispersion was cast into a Teflon®-coated vessel (80 m × 80 mm × 10 mm), then dried at 40°C for 3 hours in a forced-air oven. In this way, a uniform self-supporting film having a length of 80 mm, a width of 80 mm and a thickness of 30 µm was obtained. This self-supporting film had a total light transmittance of 40%.

The crystal system was boehmite, and the peak intensity ratio threof between the (020) plane peak near 14.5° and the (120) plane peak near 28.5° was (020)/(120) = 26.

### Comparative Example 1

### (Film Composed of Columnar Boehmite Having an Aspect Ratio of Less than 10)

Ion-exchanged water (300 g) was placed in a 500 mL four-necked flask, and the liquid temperature was raised to 75°C under stirring. Next, 64 g (0.34 mol) of aluminum isopropoxide was added dropwise thereto and the liquid temperature in the flask was raised to 98°C while distilling off the isopropyl alcohol that formed. The reaction mixture was transferred to a magnetic stirring-type autoclave, 9.38 g (0.156 mol) of acetic acid was added thereto to carry out the reaction thereof at 180°C for 5 hours under stirring.

The reaction mixture was cooled to 40°C or below to bring the reaction to completion. The solids concentration in the reaction mixture was 4.8 wt%. The alumina particles obtained were examined with a transmission electron microscope (TEM) and found to be columnar alumina particles having an average breadth of 10 nm, an average length of 50 nm and an average aspect ratio of 5.

Next, 12 g of this columnar alumina particle dispersion (solids content, 4.8 wt%) and 8 g of ion-exchanged water were placed in a plastic vessel and vigorously shaken for 20 minutes. This dispersion was degassed with a centrifuge to obtain a uniform dispersion. The dispersion was cast into a Teflon®-coated vessel (80 m × 80 mm × 10 mm), then dried at 40°C for 3 hours in a forced-air oven. However, because cracking occurred in the resulting film, the size of the film was about 5 mm × 5 mm for larger pieces; it was not possible to obtain self-supporting films of a size adequate for use.

### Comparative Example 2

### (Addition of the Water-Soluble Binder PVA; Alumina Solids Content in Sol:PVA = 1:1 (weight ratio))

Twelve grams of a dispersion of a columnar alumina particle dispersion obtained under the same conditions as in Comparative Example 1 (solids content, 4.8 wt%) and 5.7 g of a 10% aqueous solution of polyvinyl alcohol (average degree of polymerization, 900 to 1,100; fully saponified; available from Wako Pure Chemical Industries) were placed in a plastic vessel and vigorously shaken for 20 minutes. The dispersion was degassed with a centrifuge, thereby giving a uniform dispersion.

The dispersion was cast into a Teflon®-coated vessel (80 m × 80 mm × 10 mm), then dried at 40°C for 3 hours in a forced-air oven. However, because cracking occurred in the resulting film during drying, it was not possible to obtain self-supporting films of a size adequate for use.

### Comparative Example 3

### (Case in which an Amorphous Alumina Sol was Used)

Six grams of a commercial amorphous alumina sol (AS-200, available from Nissan Chemical Industries, Ltd.; solids content, 10 wt%) and 8 g of ion-exchanged water were placed in a plastic vessel and vigorously shaken for 20 minutes. This dispersant was degassed with a centrifuge, thereby giving a uniform dispersion. The dispersion was cast into a Teflon®-coated vessel (80 m × 80 mm × 10 mm), then dried at 40°C for 3 hours in a forced-air oven. However, because cracking occurred in the resulting film during drying, it was not possible to obtain a self-supporting film of a size adequate for use.

### Example 6

Ion-exchanged water (300 g) and 3.1 g (0.051 mol) of acetic acid were placed in a 500 mL four-necked flask, and the liquid temperature in the flask was raised to 75°C under stirring. Next, 34 g (0.17 mol) of aluminum isopropoxide was added dropwise thereto for 0.6 hours and the liquid temperature in the flask was raised to 95°C while distilling off the isopropyl alcohol that formed. The reaction mixture was transferred to a magnetic stirring-type autoclave to carry out the reaction at 150°C for 6 hours under stirring.

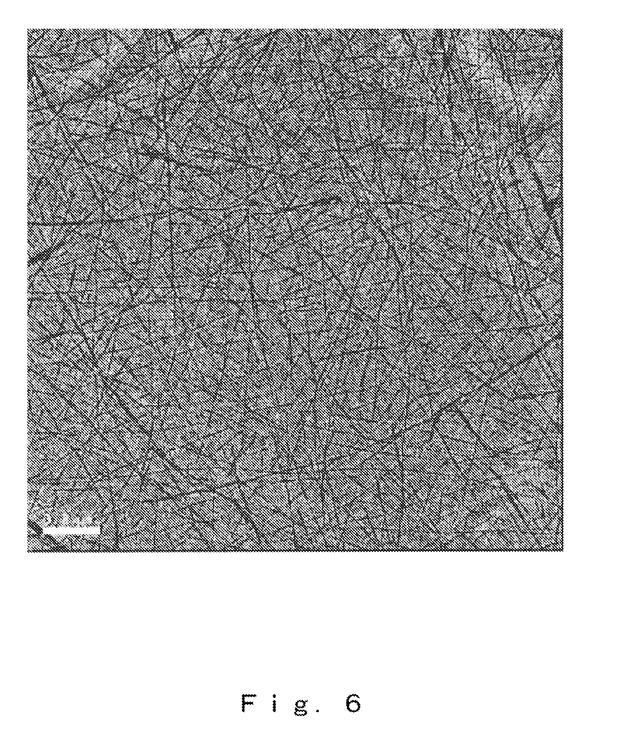

The reaction mixture was cooled to 40°C or below to bring the reaction to completion. The solids concentration in the reaction mixture was 2.8 wt%. The alumina particles in the resulting alumina sol were examined with a transmission electron microscope (TEM) and found to be fibrous alumina particles having an average breadth of 4 nm, an average length of 2,000 nm and an average aspect ratio of 500. FIG. 6 shows a transmission electron micrograph of the alumina sol prepared in this example.

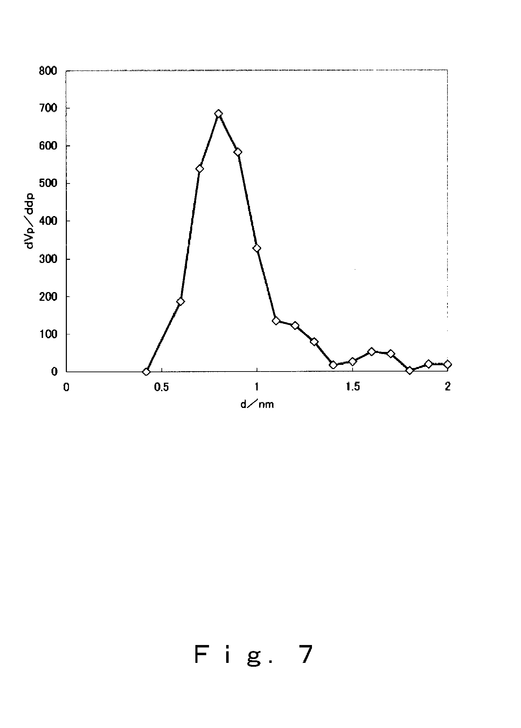

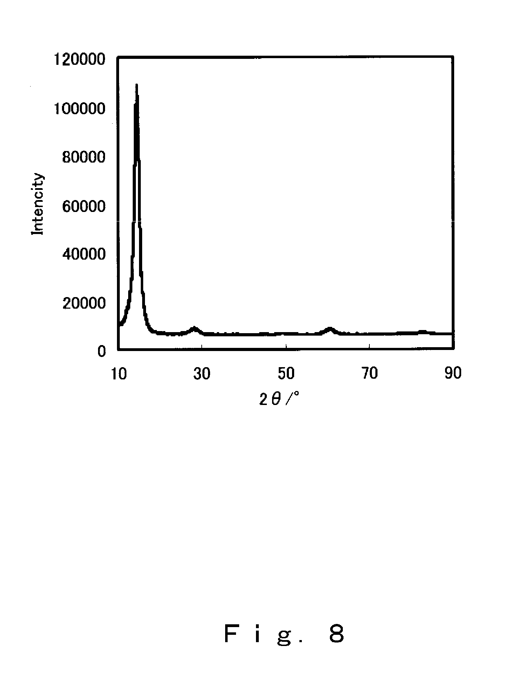

Ten grams of the alumina sol prepared in Example 6 was cast into a Teflon®-coated vessel (80 m × 80 mm × 2 mm) to form a film which was then dried at 40°C for 3 hours in a forced-air oven. The resulting film was peeled off, thereby giving a self-supporting pseudo-boehmite film measuring 80 mm × 80 mm × 40 µm thick. The pore distribution curve (MP method) and x-ray diffraction pattern of this self-supporting pseudo-boehmite film are shown in FIGS. 7 and 8. The dₚₑₐₖ of the pore distribution curve was near 0.8 nm.

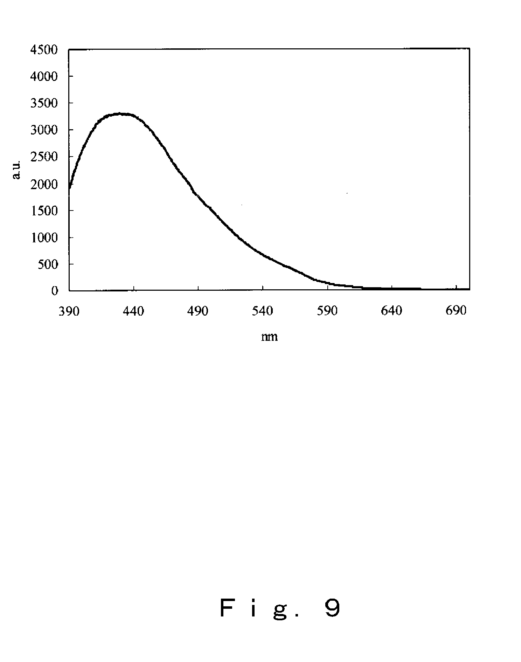

The crystal system of the above self-supporting film was boehmite, and the peak intensity ratio threof between the (020) plane peak near 14.5° and the (120) plane peak near 28.5° was (020)/(120) = 25, indicating high anisotropy. This self-supporting film, when fired at 500°C for 5 hours and excited by 365 nm wavelength light, exhibited an emission spectrum in a range of from 390 nm to 700 nm. This spectrum is shown in FIG. 9. Upon examining the storage stability of the alumina sol after two months, substantially no change in viscosity was observed, confirming that the storage stability was high.

### Example 7

Ion-exchanged water (300 g) and 10.2 g (0.17 mol) of acetic acid were placed in a 500 mL four-necked flask, and the liquid temperature in the flask was raised to 75°C under stirring. Next, 64 g (0.34 mol) of aluminum isopropoxide was added dropwise thereto for 0.5 hours and the liquid temperature in the flask was raised to 98°C while distilling off the isopropyl alcohol that formed. The reaction mixture was transferred to a magnetic stirring-type autoclave to carry out the reaction at 160°C for 3 hours under stirring.

The reaction mixture was cooled to 40°C or below to bring the reaction to completion. The solids concentration in the reaction mixture was 4.8 wt%. The alumina particles in the resulting alumina sol were examined with a transmission electron microscope (TEM) and found to be fibrous alumina particles having an average breadth of 2 nm, an average length of 2,000 nm and an average aspect ratio of 1,000.

Using 10 g of the alumina sol prepared in Example 7, a self-supporting alumina film was produced by the same operations as for the self-supporting film produced in Example 6, thereby giving a self-supporting film measuring 80 mm × 80 mm × 70 µm thick. The pore distribution of the self-supporting film of pseudo-boehmite was measured (MP method), as a result of which the dₚₑₐₖ was near 0.9 nm.

The crystal system of the above self-supporting alumina film was boehmite, and the peak intensity ratio thereof between the (020) plane peak near 14.5° and the (120) plane peak near 28.5° was (020)/(120) = 20, indicating high anisotropy. This self-supporting film, when fired at 500°C for 5 hours and excited by 365 nm wavelength light, exhibited an emission spectrum in a range of from 390 nm to 700 nm. Upon examining the storage stability of the alumina sol after two months, substantially no change in viscosity was observed, confirming that the storage stability was high.

### Example 8

Ion-exchanged water (300 g) and 25.3 g (0.421 mol) of acetic acid were placed in a 500 mL four-necked flask, and the liquid temperature was raised to 75°C under stirring. Next, 115 g (0.56 mol) of aluminum isopropoxide was added dropwise thereto for 0.8 hours and the liquid temperature in the flask was raised to 95°C while distilling off the isopropyl alcohol that formed. The reaction mixture was transferred to a magnetic stirring-type autoclave to carry out the reaction at 160°C for 5 hours under stirring.

The reaction mixture was cooled to 40°C or below to bring the reaction to completion. The solids concentration in the reaction mixture was 10 wt%. The alumina particles in the resulting alumina sol were examined with a transmission electron microscope (TEM) and found to be fibrous alumina particles having an average breadth of 2 nm, an average length of 3,000 nm and an average aspect ratio of 1,500.

Using 5 g of the alumina sol prepared in Example 8, a self-supporting alumina film was produced by the same operations as for the self-supporting film produced in Example 6, thereby giving a self-supporting film measuring 80 mm × 80 mm × 60 µm thick. The pore distribution of the self-supporting film of pseudo-boehmite was measured (MP method), as a result of which the dₚₑₐₖ was near 0.9 nm.

The crystal system of the above self-supporting alumina film was boehmite, and the peak intensity ratio thereof between the (020) plane peak near 14.5° and the (120) plane peak near 28.5° was (020)/(120) = 27, indicating high anisotropy. This self-supporting film, when fired at 500°C for 5 hours and excited by 365 nm wavelength light, exhibited an emission spectrum in a range of from 390 nm to 700 nm. Upon examining the storage stability of the alumina sol after two months, substantially no change in viscosity was observed, confirming that the storage stability was high.

### Comparative Example 4

### (Columnar Boehmite 1 with Aspect Ratio of Less than 10)

Ion-exchanged water (300 g) and 4.08 g (0.068 mol) of acetic acid were placed in a 500 mL four-necked flask, and the liquid temperature in the flask was raised to 75°C under stirring. Next, 64 g (0.34 mol) of aluminum isopropoxide was added dropwise and the liquid temperature in the flask was raised to 98°C while distilling off the isopropyl alcohol that formed.

The reaction mixture was transferred to a magnetic stirring-type autoclave, and reacted at 180°C for 5 hours. The reaction mixture was cooled to 40°C or below to bring the reaction to completion. The solids concentration in the reaction mixture was 4.8 wt%. The alumina particles in the resulting alumina sol were examined with a transmission electron microscope (TEM) and found to be columnar alumina particles having an average breadth of 10 nm, an average length of 100 nm and an average aspect ratio of 10.

Using 10 g of the alumina sol prepared in Comparative Example 4, a self-supporting alumina film was produced by the same operations as for the self-supporting film produced in Example 6. As a result, cracking occurred in the film during drying and a film of only about 10 mm × 10 mm could be obtained, indicating a poor film formability. Upon measuring the pore distribution of the self-supporting pseudo-boehmite film (BJH method), the dₚₑₐₖ was near 2.1 nm.

The crystal system of the above self-supporting film was boehmite, and the peak intensity ratio thereof between the (020) plane peak near 14.5° and the (120) plane peak near 28.5° was (020)/(120) = 2.1, indicating low anisotropy. Upon examining the storage stability of the alumina sol after two months, substantially no change in viscosity was observed, confirming that the storage stability was high.

### Comparative Example 5

### (Columnar Boehmite 2 with Aspect Ratio of Less than 10)

Ion-exchanged water (300 g) and 2.34 g (0.039 mol) of acetic acid were placed in a 500 mL four-necked flask, and the liquid temperature in the flask was raised to 75°C under stirring. Next, 16 g (0.078 mol) of aluminum isopropoxide was added dropwise and the liquid temperature in the flask was raised to 98°C while distilling off the isopropyl alcohol that formed.

The reaction mixture was transferred to a magnetic stirring-type autoclave, and reacted at 150°C for 5 hours. The reaction mixture was cooled to 40°C or below to bring the reaction to completion. The solids concentration in the reaction mixture was 1.2 wt%. The alumina particles in the resulting alumina sol were examined with a transmission electron microscope (TEM) and found to be columnar alumina particles having an average breadth of 10 nm, an average length of 50 nm and an average aspect ratio of 5.

Using 20 g of the alumina sol prepared in Comparative Example 5, a self-supporting alumina film was produced by the same operations as for the self-supporting film produced in Example 6. As a result, cracking occurred in the film during drying and a film of only about several mm × several mm could be obtained, indicating a poor film formability. Upon measuring the pore distribution of the self-supporting pseudo-boehmite film (BJH method), the dₚₑₐₖ was near 2.3 nm.

The crystal system of the above self-supporting film was boehmite, and the peak intensity ratio thereof between the (020) plane peak near 14.5° and the (120) plane peak near 28.5° was (020)/(120) - 1.3, indicating low anisotropy. Upon examining the storage stability of the alumina sol after two months, substantially no change in viscosity was observed, confirming that the storage stability was high.

### Comparative Example 6

Ion-exchanged water (300 g) and 15.3 g (0.255 mol) of acetic acid were placed in a 500 mL four-necked flask, and the liquid temperature in the flask was raised to 75°C under stirring. Next, 64 g (0.34 mol) of aluminum isopropoxide was added dropwise over a period of 0.6 hour, and the liquid temperature in the flask was raised to 95°C while distilling off the isopropyl alcohol that formed.

The reaction mixture was transferred to a magnetic stirring-type autoclave, and reacted at 100°C for 1 hour. The reaction mixture was cooled to 40°C or below to bring the reaction to completion. The solids concentration in the reaction mixture was 4.8 wt%. The alumina particles in the resulting alumina sol were examined with a transmission electron microscope (TEM) and found to be fibrous alumina particles having an average breadth of 0.8 nm, an average length of 100 nm and an average aspect ratio of 125.

Using 10 g of the alumina sol prepared in Comparative Example 6, a self-supporting alumina film was produced by the same operations as for the self-supporting film produced in Example 6. As a result, cracking occurred in the film during drying and a film of only about 10 mm × 10 mm could be obtained, indicating a poor film formability. Upon measuring the pore distribution of the self-supporting pseudo-boehmite film (BJH method), the dₚₑₐₖ was near 0.8 nm.

The crystal system of the above self-supporting film was boehmite, and the peak intensity ratio thereof between the (020) plane peak near 14.5° and the (120) plane peak near 28.5° was (020)/(120) = 12, indicating anisotropy. Upon examining the storage stability of the alumina sol, one week later gelation had occurred, as a result of which the storage stability was confirmed to be low. Table 1 shows the evaluation results for the alumina sols test-produced in the working examples of the invention and the comparative examples.

**Table 1**

| | Solids concentration (wt%) | Acetic acid/Al | Average breadth (nm) | Average length (nm) | Aspect ratio | Film formability | Poredₚₑₐₖ | Storage stability |
|---|---|---|---|---|---|---|---|---|
| Example 1 | 2.8 | 0.3 | 4 | 2,000 | 500 | good | 0.8 | good |
| Example 2 | 4.8 | 0.5 | 2 | 2,000 | 1,000 | good | 0.9 | good |
| Example 3 | 10 | 0.75 | 2 | 3,000 | 1,500 | good | 0.9 | good |
| Comp. Ex. 1 | 4.8 | 0.2 | 10 | 100 | 10 | NG | 2.1 | good |
| Comp. Ex. 2 | 1.2 | 0.5 | 10 | 50 | 5 | NG | 2.3 | good |
| Comp. Ex. 3 | 4.8 | 0.75 | 0.8 | 100 | 125 | NG | 0.8 | NG |

### INDUSTRIAL APPLICABILITY

As described in detail above, the present invention relates to a porous alumina self-supporting film and a method for producing the same. With the invention, there can be obtained a porous alumina self-supporting film which has flexibility and transparency, is easy to work, and is useful as an alumina thin-film material required to have flexibility or as a precursor for the same. Because the porous alumina self-supporting film of the invention is composed of highly oriented alumina crystals which are boehmite or pseudo-boehmite, the porous alumina self-supporting film of the invention has a high flexibility, transparency and crystal orientation even without containing a water-soluble binder or a surfactant. This invention is useful for providing a novel porous alumina self-supporting film which can be used as a precursor for self-supporting alumina films, or can be used as a material in, for example, optical materials, sensor devices, separation membranes, photoelectrochemical membranes, ion-conducting membranes and catalyst carriers endowed with excellent thermal stability, heat conductivity and electrical insulating properties.

The invention also relates to an alumina sol and a method for producing the same. By means of the invention, there can be obtained an alumina sol having a high aspect ratio and a high storage stability which is composed of fibrous or needle-like alumina particles dispersed in a solution. A porous alumina self-supporting film which exhibits luminescence when irradiated with 365 nm wavelength light can be produced from the inventive alumina sol by removing the solvent to give a dry alumina gel, and firing the gel at 250 to 900°C.

## Claims

1. A porous alumina self-supporting film comprising a collection of fibrous or needle-like alumina hydrate particles or alumina particles having an aspect ratio (length/breadth) of from 30 to 5,000,
wherein the film has an orientation, contains pores having a pore distribution that a pore diameter dₚₑₐₖ indicating a peak top is from 0.5 to 20 nm in a pore distribution curve obtained by using the MP method or the BJH method to analyze a nitrogen adsorption isotherm measured at a liquid nitrogen temperature, has a total light transmittance more than 20% at a film thickness of 0.1 to 100 µm, and has a heat resistance that the film maintains a film structure when fired at a temperature up to 1,000°C.

2. The porous alumina self-supporting film according to claim 1, wherein the alumina hydrate particles are of at least one type selected from amorphous, boehmite and pseudo-boehmite particles.

3. The porous alumina self-supporting film according to claim 1, wherein the alumina particles have a crystal system which is at least one type selected from γ, θ and α.

4. The porous alumina self-supporting film according to claim 1, wherein the porous alumina self-supporting film has a thickness of more than 0 µm and up to 1,000 µm.

5. The porous alumina self-supporting film according to claim 1, wherein the alumina hydrate particles or alumina particles have a breadth of from 1 to 10 nm and a length of from 100 to 10,000 nm.

6. The porous alumina self-supporting film according to claim 1, wherein the alumina hydrate particles or alumina particles have an aspect ratio of from 100 to 3,000.

7. The porous alumina self-supporting film according to claim 1, wherein the alumina hydrate particles or alumina particles have a length of from 700 to 7,000 nm.

8. The porous alumina self-supporting film according to claim 1, which is a porous alumina self-supporting film comprising a collection of at least one type of alumina hydrate particles selected from boehmite and pseudo-boehmite particles, wherein in x-ray diffraction analysis, the porous alumina self-supporting film has a crystal orientation **characterized by** a diffraction intensity ratio d(020)/d(0120) between the crystallite plane (020) and the crystallite plane (120) of at least 5.

9. The porous alumina self-supporting film according to claim 1, which is a porous alumina self-supporting film comprising a collection of at least one type of alumina hydrate particles selected from amorphous, boehmite and pseudo-boehmite particles, wherein when a flex resistance test is carried out according to JIS K5600-5-1 in a state immediately after being peeled from a substrate and at a film thickness of 100 µm or less, cracking does not occur at a cylindrical mandrel diameter of 2 mm or more.

10. The porous alumina self-supporting film according to claim 1, which is of at least one type selected from amorphous, boehmite, pseudo-boehmite, γ-alumina and θ-alumina, and which luminesces when irradiated with ultraviolet light.

11. The porous alumina self-supporting film according to claim 10, which luminesces in a wavelength range of 400 nm to 700 nm when irradiated with ultraviolet light having a wavelength of 365 nm.

12. The porous alumina self-supporting film according to claim 1, which is composed primarily of θ-alumina and maintains a film structure even when fired at a temperature up to 1,000°C.

13. A method for producing the porous alumina self-supporting film according to any one of claims 1 to 7, comprising: coating, onto a substrate, an aqueous alumina sol in which are dispersed fibrous or needle-like alumina hydrate particles having a breadth of 2 to 5 nm, a length of 100 to 10,000 nm and an aspect ratio of 30 to 5,000; and removing the substrate after drying, or removing the substrate and performing heating and firing.

14. The method for producing the porous alumina self-supporting film according to claim 13, wherein the alumina hydrate particles are of at least one type selected from boehmite and pseudo-boehmite particles.

15. The method for producing the porous alumina self-supporting film according to claim 13, wherein the alumina sol is obtained by hydrolyzing and peptizing an aluminum alkoxide.

16. An alumina sol obtained by hydrolyzing aluminum alkoxide, comprising fibrous or needle-like alumina hydrate particles or alumina particles having a breadth of 1 to 10 nm, a length of 100 to 10,000 nm and an aspect ratio (length/breadth) of 30 to 5,000 dispersed in a solution, wherein the sol has a Na, K and SO₄ content of 0 to 1 ppm, has an orientation when the particles are collected, and luminesces when excited by ultraviolet light after firing treatment at 250 to 900°C.

17. The alumina sol according to claim 16, wherein the alumina particles in the alumina sol have a breadth of 1 to 10 nm and a length of 100 to 10,000 nm.

18. The alumina sol according to claim 16, wherein the alumina particles in the alumina sol have an aspect ratio of 100 to 3,000.

19. The alumina sol according to claim 16, wherein the alumina particles in the alumina sol have a breadth of 2 to 5 nm and a length of 500 to 7,000 nm.

20. The alumina sol according to claim 16, wherein the alumina particles in a dry alumina gel obtained by removing solvent from the alumina sol are boehmite or pseudo-boehmite particles.

21. The alumina sol according to claim 16, wherein the concentration of Na, K, Cl and SO₄ in the alumina sol solution is 1 ppm or less.

22. The alumina sol according to claim 16, wherein an alumina gel, which is obtained by firing at 150°C a dry alumina gel obtained by removing solvent from the alumina sol, exhibits a pore distribution maximum at between 0.4 nm and 20 nm.

23. The alumina sol according to claim 16, wherein a dry alumina gel obtained by removing solvent from the alumina sol exhibits luminescence when fired at 250°C to 900°C and then irradiated with 365 nm wavelength light.

24. The alumina sol according to claim 16, wherein a dry alumina gel obtained by removing solvent from the alumina sol luminesces in a wavelength range of 390 nm to 700 nm when fired at 250°C to 900°C and then irradiated with 365 nm wavelength light.

25. The alumina sol according to claim 16, wherein the alumina sol has a viscosity that does not change over time even when held at room temperature for two months.

26. A method for producing an alumina sol, comprising hydrolyzing an aluminum alkoxide in an aqueous solution of an acid to form an alumina hydrate, removing an alcohol that has been formed, and then performing peptizing, the sol being composed of a solution in which are dispersed fibrous or needle-like alumina particles having an aspect ratio of 30 to 5,000, and the alumina sol solution having a Na, K and SO₄ concentration in a range of 0 ppm to 1 ppm,
wherein the amount of acid used is from 0.2 to 2.0 moles per mole of aluminum alkoxide, the hydrolysis reaction is carried out at a solids concentration of 2 to 15 wt% and a temperature not in excess of 100°C for 0.1 to 3 hours, and peptization is carried out by heating at from 100 to 200°C for 0.1 to 10 hours.

27. The method for producing an alumina sol according to claim 26, wherein the acid is acetic acid.

28. The method for producing an alumina sol according to claim 26, wherein the concentration of alumina in the alumina sol is adjusted so as to become 2 to 15 wt% upon completion of hydrolysis.
